Europäisches Patentamt

European Patent Office

Office européen des brevets

(11) Numéro de publication: **0 411 979 A2**

## (12) DEMANDE DE BREVET EUROPEEN

(21) Numéro de dépôt: 90401949.4

(22) Date de dépôt: 05.07.90

(51) Int. Cl.⁵: **B60R 21/04**, B60R 21/22

(30) Priorité: 04.08.89 FR 8910522

(43) Date de publication de la demande:
06.02.91 Bulletin 91/06

(84) Etats contractants désignés:
DE ES FR GB IT

(71) Demandeur: **REGIE NATIONALE DES USINES RENAULT**
**Boîte postale 103 8-10 avenue Emile Zola**
**F-92109 Boulogne-Billancourt(FR)**

(72) Inventeur: **Helary, Bernard**
**21, rue de Seine**
**F-92100 Boulogne Billancourt(FR)**

(74) Mandataire: **Ernst-Schonberg, Michel et al**
**REGIE NATIONALE DES USINES RENAULT (S.**
**0267) 8 & 10, avenue Emile Zolaola**
**F-92109 Boulogne Billancourt Cédex(FR)**

(54) **Dispositif de rembourrage et de protection latérale pour paroi d'habitacle de véhicule automobile.**

(57) Dispositif de rembourrage et de protection latérale pour paroi d'habitacle de véhicule automobile monté mobile entre une position de repos dans laquelle le rembourrage (3,) est immobilisé sur la paroi (5) et une position de travail dans laquelle le rembourrage est introduit dans l'habitacle consécutivement à la mise en oeuvre d'un système d'actionnement (10), caractérisé par le fait que le rembourrage est mis en relation avec un moyen actionneur à commande mécanique dont l'énergie d'actionnement est communiquée par déformation d'une paroi extérieure (6) du véhicule

FIG. 1

# DISPOSITIF DE REMBOURRAGE ET DE PROTECTION LATERAL POUR PAROI D'HABITACLE DE VEHICULE AUTOMOBILE

L'invention concerne un dispositif de rembourrage et de protection latérale pour paroi d'habitacle de véhicule automobile.

La publication FR-A 2 346 186 décrit un rembourrage composite en deux parties, l'une des parties constituant un corps peu déformable, l'autre partie étant un corps souple cellulaire.

Ce type de rembourrage réduit sensiblement les dimensions intérieures de l'habitacle et, par voie de conséquence, le confort de conduite du véhicule.

Par contre, sous l'effet de chocs des occupants contre les parois, consécutivement a des collisions latérales, le rembourrage réduit dans certaines conditions la gravité des blessures.

La publication DE-A 836 748 décrit un rembourrage constitué par un ensemble de parois mobiles sous l'action d'une centrale pneumatique. La mise en oeuvre de tels rembourrages nécessite un ensemble de détection destiné à libérer le fluide d'actionnement de la paroi.

L'invention a pour objet un dispositif de rembourrage et de protection, mobile entre une position de repos dans laquelle le rembourrage est immobilisé, et une position de travail dans laquelle le rembourrage est introduit dans l'habitacle consécutivement à la mise en oeuvre d'un actionneur.

Selon l'invention, le rembourrage est mis en relation avec un moyen actionneur à commande mécanique dont l'énergie d'actionnement est communiquée par déformation d'une paroi extérieure du véhicule.

Le dispositif ainsi réalisé est avantageusement incorporé dans le corps creux constitué par le coffrage d'une porte de véhicule automobile ou plus généralement dans celui d'une paroi latérale de l'habitacle.

Le dispositif dispose, en outre, l'avantage d'être mis en oeuvre mécaniquement sans augmenter substantiellement le poids du véhicule et sans modification préalable de la carrosserie.

D'autres caractéristiques et avantages de l'invention apparaîtront à la lecture de deux exemples de réalisation de celle-ci en référence du dessin annexé dans lequel :

- La figure 1 est une représentation schématique d'un mode de réalisation de l'invention appliquée à une porte de véhicule automobile en position normale d'utilisation,
- La figure 2 est une représentation schématique d'un autre mode de réalisation de l'invention,
- Les figures 3 et 4 décrivent l'état de fonctionnement des dispositifs représentée aux figures 1 et 2 à la suite d'une collision latérale.

Ainsi que cela est montré aux différentes figures, une porte d'accès 1 à un habitacle 2 de véhicule automobile porte un rembourrage 3 constitué ainsi que cela est bien connu par une garniture d'habillage 4 réalisée sous la forme d'un panneau agrafé à la paroi intérieure 5 de la porte.

Un système d'actionnement 10 est accolé à la paroi 6 extérieure de la porte 1.

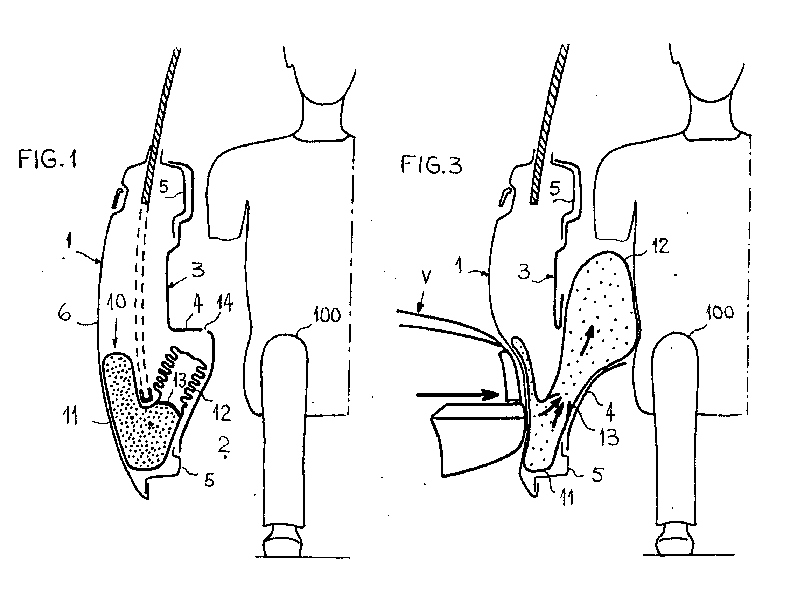

Selon la figure 1, le système d'actionnement est constitué par un réservoir 11 de fluide tel que de l'air comprimé agissant en tant que moyen actionneur en relation avec un sac gonflable 12 au travers d'un obturateur ou membrane 13 dont la résistance à la rupture est étalonnée.

La garniture d'habillage 4 possède une ouverture d'éjection 14 du sac 12 dont la résistance de passage est très faible par rapport à la poussée exercée par le sac 12 à l'état gonflé.

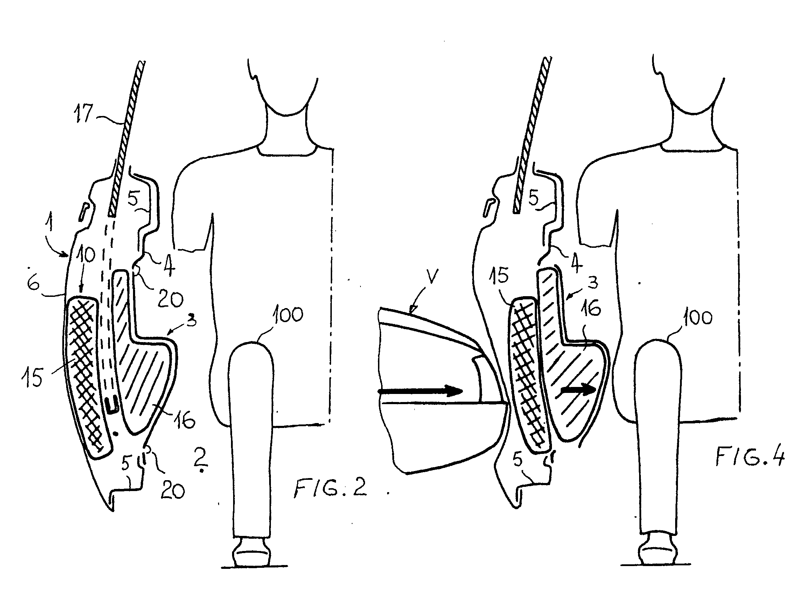

Selon la figure 2, le système d'actionnement est constitué par un élément cellulaire 15 rigide à haute densité agissant en tant que moyen actionneur situé contre la paroi extérieure 6 de la porte 1. L'élément cellulaire 15 est placé dans le coffrage de la porte à proximité d'un bloc de mousse souple 16 constitutif du rembourrage. Le bloc 16 est séparé latéralement de l'élément 15 par le passage de la vitre descendante 17.

Le rembourrage 3 avec son bloc de mousse 16 porte un moyen de retenue périphérique 20 constitué à titre d'exemple par un profilé enjoliveur soudé à la périphérie du rembourrage, pour favoriser sa désolidarisation partielle de la garniture 4 de la paroi intérieure 5 après rupture du moyen 20.

Le mode de fonctionnement du dispositif ressortira des figures 3 et 4.

Lors d'une collision latérale avec un véhicule V ou de choc du véhicule avec un obstacle, l'effort de déformation communiqué à la paroi extérieure 6 génère un accroissement de pression dans le réservoir 11, et l'éclatement de la membrane lorsque la pression du réservoir atteint une valeur de seuil Po. Le fluide remplit alors le sac 12 qui réalise la fonction de coussin amortisseur interposé entre la paroi intérieure 5 de l'habitacle et son passager 100.

Dans le but de favoriser le gonflage du sac, la garniture 4 possède une zone de moindre résistance favorable à la création d'une déchirure dans l'ouverture d'éjection 14.

Dans le mode de fonctionnement décrit à la figure 4, la force d'impact du véhicule V communique à l'élément 15 un effort de déplacement pour générer une poussée transversale sur le bloc 16 et le rembourrage.

Le rembourrage se désolidarise alors de la garniture 4 et s'interpose entre le passager 100 et la paroi 5.

**Revendications**

1. Dispositif de rembourrage et de protection latérale pour paroi d'habitacle de véhicule automobile monté mobile entre une position de repos dans laquelle le rembourrage (3, 16) est immobilisé sur la paroi (5) et une position de travail dans laquelle le rembourrage est introduit dans l'habitacle consécutivement à la mise en oeuvre d'un système d'actionnement (10), caractérisé par le fait que le rembourrage est mis en relation avec un moyen actionneur à commande mécanique dont l'énergie d'actionnement est communiquée par déformation d'une paroi extérieure (6) du véhicule.

2. Dispositif selon la revendication 1, caractérisé par le fait que le moyen actionneur est un fluide disposé dans un réservoir (11).

3. Dispositif selon la revendication 1, caractérisé par le fait que le moyen actionneur est un élément cellulaire (15) rigide à haute densité.

4. Dispositif selon la revendication 2, caractérisé par le fait que le réservoir (11) du moyen actionneur peut être en relation avec un sac gonflable (12) au travers d'un obturateur (13) et que ledit sac est adjacent à une ouverture d'éjection (14) à l'extérieur de la garniture (4) d'habillage de la paroi (5) d'habitacle.

5. Dispositif selon la revendication 3, caractérisé par le fait qu'au rembourrage (16) est associé un moyen de séparation de celui-ci de la garniture (4) de la paroi intérieure de l'habitacle.

6. Dispositif selon l'une quelconque des revendications 1 à 5, caractérisé par le fait que le moyen actionneur (11, 15) est adjacent à la paroi extérieure (6) du véhicule.

FIG.3

FIG.1

FIG.4

FIG.2